# EUROPÄISCHE PATENTSCHRIFT

(11) **EP 3 466 903 B1**
(45) Veröffentlichungstag und Bekanntmachung des Hinweises auf die Patenterteilung: **01.04.2020**
(21) Anmeldenummer: 17194673.4
(22) Anmeldetag: 04.10.2017
(51) Int. Cl.: C04B 35/01, C04B 35/03, C04B 35/043, C04B 35/101, C04B 35/105, C04B 35/111, C04B 35/185, C04B 35/20, C04B 35/443, C04B 35/462, C04B 35/465, C04B 35/48, C04B 35/66

(54) **VERSATZ ZUR HERSTELLUNG EINES FEUERFESTEN ERZEUGNISSES, VERFAHREN ZUR HERSTELLUNG EINES FEUERFESTEN ERZEUGNISSES, EIN FEUERFESTES ERZEUGNIS SOWIE DIE VERWENDUNG EINES SYNTHETISCHEN ROHSTOFFS**
BATCH FOR PRODUCING A REFRACTORY PRODUCT, METHOD FOR THE MANUFACTURE OF A REFRACTORY PRODUCT, A REFRACTORY PRODUCT AND THE USE OF SYNTHETIC RAW MATERIAL
MELANGE DESTINÉE À LA FABRICATION D'UN PRODUIT REFRACTAIRE, PROCÉDÉ DE FABRICATION D'UN PRODUIT REFRACTAIRE, PRODUIT REFRACTAIRE ET UTILISATION D'UNE MATIÈRE PREMIÈRE SYNTHÉTIQUE

(43) Veröffentlichungstag der Anmeldung: 10.04.2019
(73) Patentinhaber: Refractory Intellectual Property GmbH & Co. KG, 1100 Wien (AT)
(72) Erfinder: MAJCENOVIC, Christian, 8111 Gratwein-Straßengel (AT); GEITH, Martin, 8700 Leoben (AT); NILICA, Roland, 8715 St. Marein-Feistritz (AT); NIEVOLL, Josef, 1060 Wien (AT)
(74) Vertreter: Berkenbrink, Kai-Oliver

(56) Entgegenhaltungen:
- EP-A1- 1 118 601
- EP-A1- 2 522 645
- WO-A1-2011/011470
- US-A1- 2016 304 402

## Beschreibung

Die Erfindung betrifft einen Versatz zur Herstellung eines feuerfesten Erzeugnisses, ein Verfahren zur Herstellung eines feuerfesten Erzeugnisses, ein feuerfestes Erzeugnis sowie die Verwendung eines synthetischen Rohstoffs.

Der Begriff "feuerfestes Erzeugnis" im Sinne der Erfindung bezeichnet sowohl feuerfeste keramische (also gesinterte) Erzeugnisse als auch feuerfeste Erzeugnisse mit Kohlenstoffbindung, insbesondere jeweils mit einer Einsatztemperatur von über 600°C und bevorzugt feuerfeste Werkstoffe gemäß DIN 51060: 2000-6, also Werkstoffe mit einem Kegelfallpunkt größer SK17. Die Ermittlung des Kegelfallpunktes kann insbesondere gemäß DIN EN 993-12: 1997-06 erfolgen.

Mit einem "Versatz" wird bekanntermaßen eine Zusammensetzung aus einer oder mehreren Komponenten beziehungsweise Rohstoffen bezeichnet, durch die mittels einer Temperaturbehandlung, also beispielsweise mittels eines keramischen Brandes zur Herstellung eines gesinterten feuerfesten Erzeugnisses, ein feuerfestes Erzeugnis herstellbar ist.

Wie alle keramischen Erzeugnisse, weisen auch feuerfeste Erzeugnisse, insbesondere feuerfeste keramische Erzeugnisse in der Regel eine hohe Sprödigkeit auf. Eine hohe Sprödigkeit feuerfester Erzeugnisse kann jedoch zu verschlechterten feuerfesten Eigenschaften der Erzeugnisse führen, insbesondere beispielsweise zu einer reduzierten Temperaturwechselbeständigkeit der Erzeugnisse. Aus dem Stand der Technik sind daher Technologien bekannt, die Sprödigkeit eines feuerfesten Erzeugnisses zu verringern, um hierdurch seine Temperaturwechselbeständigkeit zu verbessern. So ist es beispielsweise bekannt, die Sprödigkeit feuerfester Erzeugnisse durch sogenannte Elastifizierer, die in die Matrix des Erzeugnisses eingebunden werden, zu verringern und die Temperaturwechselbeständigkeit des Erzeugnisses hierdurch zu verbessern. Die Wirkungsweise dieser Elastifizierer beruht darauf, dass diese ein anderes Wärmeausdehnungsverhalten als die Grundkomponente des feuerfesten Erzeugnisses aufweisen, so dass es beim keramischen Brand des Erzeugnisses und seiner anschließenden Abkühlung zu Spannungen zwischen dem Elastifizierer und der Grundkomponente kommt. Hierdurch bilden sich Mikrorisse im Erzeugnis, die im Fall einer mechanischen Belastung des Erzeugnisses einen Teil der Bruchenergie kompensieren, wodurch die Gefahr eines Sprödigkeitsbruches des Erzeugnisses verringert werden kann. Nachteilig an der Verwendung der bekannten Elastifizierer ist jedoch, dass die Sprödigkeit des feuerfesten Erzeugnisses hierdurch häufig nicht im gewünschten Umfang reduziert werden kann. Nachteilig ist ferner, dass der Unterschied im Wärmeausdehnungsverhalten zwischen der Grundkomponente einerseits und dem Elastifizierer andererseits insbesondere auf Grund des gegebenen Wärmeausdehnungsverhalten des Elastifizierers vorgegeben ist und die zur Mikrorissbildung notwendigen Spannungen zwischen dem Elastifizierer und der Grundkomponente daher häufig nicht im gewünschten Umfang eingestellt werden können.

WO 2011/011470 A1 beschreibt eine Mischung auf Basis von Tonerde, die keramische Fasern umfasst, und die als Mörtel oder Überzug verwendbar ist.

Der Erfindung liegt die Aufgabe zu Grunde, einen Versatz zur Verfügung zu stellen, durch den ein feuerfestes Erzeugnis mit einer geringen Sprödigkeit beziehungsweise mit einer hohen Temperaturwechselbeständigkeit herstellbar ist. Ferner liegt der Erfindung die Aufgabe zu Grunde, einen solchen Versatz zur Verfügung zu stellen, welcher einen Elastifizierer aufweist, durch welchen die Sprödigkeit des aus dem Versatz herstellbaren feuerfesten Erzeugnisses reduziert beziehungsweise dessen Temperaturwechselbeständigkeit erhöht werden kann. Ferner liegt der Erfindung die Aufgabe zu Grunde, einen solchen Versatz zur Verfügung zu stellen, welcher einen solchen Elastifizierer aufweist, durch welchen die Sprödigkeit des aus dem Versatz herstellbaren feuerfesten Erzeugnisses in einem gewünschten Umfang reduziert beziehungsweise dessen Temperaturwechselbeständigkeit in einem gewünschten Umfang erhöht werden kann.

Eine weitere Aufgabe der Erfindung besteht darin, ein feuerfestes Erzeugnis mit einer geringen Sprödigkeit beziehungsweise einer hohen Temperaturwechselbeständigkeit zur Verfügung zu stellen.

Eine weitere Aufgabe der Erfindung besteht darin, ein Verfahren zur Herstellung eines solchen feuerfesten Erzeugnisses zur Verfügung zu stellen.

Erfindungsgemäß gelöst wird die Aufgabe durch die zur Verfügungstellung eines Versatzes zur Herstellung eines feuerfesten Erzeugnisses, umfassend die folgenden Komponenten:
Eine Grundkomponente aus wenigstens einem feuerfesten keramischen Rohstoff, die zu wenigstens 50 Masse-% aus MgO besteht; sowie
wenigstens einen synthetischen Rohstoff mit folgenden Merkmalen:
   Der synthetische Rohstoff besteht aus Körpern, wobei die Körper die folgenden Merkmale aufweisen:
   Die Körper bestehen aus miteinander versinterten Körnern aus wenigstens einem feuerfesten keramischen Rohstoff, wobei die Körper einen Anteil an Tonmineralen unter 10 Masse-%, bezogen auf die Gesamtmasse der Körper, aufweisen;
   die Körper weisen ein Verhältnis von (Dicke):(Breite):(Länge) von (1):(≥ 1 und ≤ Länge):(≥ 3) auf.

Überraschend hat sich erfindungsgemäß herausgestellt, dass solche Körper aus miteinander versinterten Körnern in einem feuerfesten Erzeugnis als Elastifizierer wirken, durch die die Sprödigkeit in einem aus einem solchen Versatz hergestellten feuerfesten Erzeugnis signifikant reduziert werden kann. Diese Reduzierung der Sprödigkeit des feuerfesten Erzeugnisses beziehungsweise die Verbesserung seiner Temperaturwechselbeständigkeit zeigt sich insbesondere in einem signifikant reduzierten Elastizitätsmodul (E-Modul) eines solchen Erzeugnisses. So weist ein feuerfestes Erzeugnis, welches aus einem Versatz hergestellt ist, welcher den erfindungsgemäßen synthetischen Rohstoff aus Sinterkörpern umfasst, einen signifikant reduzierten E-Modul im Vergleich zu einem solchen feuerfesten Erzeugnis auf, welches aus einem entsprechenden Versatz, jedoch ohne einen solch synthetischen Rohstoff aus Sinterkörpern, hergestellt ist.

Die genaue Wirkungsweise der Körper als Elastifizierer ist noch nicht endgültig geklärt. Die Erfinder vermuten, dass sich auf Grund der individuellen Geometrie und Zusammensetzung der Körper bei dem Brand eines solche Körper umfassenden Versatzes lokale Spannungsfelder um die Körper aufbauen, die zu Mikrorissen in dem dabei hergestellten feuerfesten Erzeugnis führen, was die Sprödigkeit des Erzeugnisses vermindert.

Vor diesem Hintergrund ergibt sich ein weiterer wesentlicher Vorteil des erfindungsgemäßen Versatzes. So kann der Umfang der durch die Körper im feuerfesten Erzeugnis gebildeten Mikrorisse durch die individuelle Einstellung des Gefüges sowie der Geometrie der Körper eingestellt werden. Im Gegensatz zum Stand der Technik, bei dem Elastifizierer in der Regel aus einem Stoff mit einem vorgegebenen Wärmeausdehnungsverhalten gebildet sind, lässt sich der Umfang der Wirkung der Körper als Elastifizierer in einem aus dem erfindungsgemäßen Versatz hergestellten Erzeugnis damit individuell durch die Geometrie und/oder Zusammensetzung der Körper einstellen.

Erfindungsgemäß wurde jedoch auch festgestellt, dass sich die feuerfesten Eigenschaften eines aus einem Sinterkörper umfassenden Versatz hergestellten feuerfesten Erzeugnisses verschlechtern können, insbesondere sich die Hochfeuerfestigkeit eines solchen Erzeugnisses verschlechtern kann. So zeigen sich insbesondere verschlechterte Werte für das Druckerweichen eines solchen Erzeugnisses, wenn die Zusammensetzung der Körper insoweit vorliegt, als diese bereits bei verhältnismäßig niedrigen Anwendungstemperaturen des Erzeugnisses Schmelzphasen bilden. Insoweit wurde erfindungsgemäß festgestellt, dass die Körper einen Anteil an Tonmineralen unter 10 Masse-% aufweisen sollten, so dass die Körper bei verhältnismäßig niedrigen Temperaturen, also insbesondere bereits bei Temperaturen unter 1.400°C und noch bevorzugter 1.450°C, keine Mengen an niedrig schmelzenden Phasen ausbilden, die die Temperaturbeständigkeit negativ beeinträchtigen.

Unter Tonmineralen werden hierin insbesondere Alumosilikate verstanden, insbesondere Tonminerale der Kaolingruppe, insbesondere Kaolinit. Um die feuerfesten Eigenschaften eines aus dem erfindungsgemäßen Versatz hergestellten feuerfesten Erzeugnisses hinsichtlich seines Druckerweichens nicht zu verschlechtern, ist insoweit vorgesehen, dass die Körper einen Anteil an Tonmineralen unter 10 Masse-% aufweisen und besonders bevorzugt einen möglichst nahe an einem Anteil an 0 Masse-% liegenden Anteil an Tonmineralen aufweisen, also bevorzugter unter 9, noch bevorzugter unter 5 Masse-%, noch bevorzugter unter 3 Masse-%, noch bevorzugter unter 2 und noch bevorzugter unter 1 Masse-%, jeweils bezogen auf die Gesamtmasse der Körper.

Erfindungsgemäß wurde festgestellt, dass sich insbesondere die feuerfesten Eigenschaften eines aus dem erfindungsgemäßen Versatz hergestellten feuerfesten Erzeugnisses hinsichtlich seines Druckerweichens verschlechtern, wenn die Körper einen Anteil an dem Tonmineral Mullit aufweisen. Erfindungsgemäß ist daher bevorzugt vorgesehen, dass die Körper einen Anteil an Mullit unter 7 Masse-% aufweisen, bevorzugter unter 3 Masse-% und noch bevorzugter unter 1 Masse-%, jeweils bezogen auf die Gesamtmasse der Körper.

Ebenfalls um den Anteil an etwaig in den Körpern gebildeten Schmelzphasen möglichst gering zu halten, kann vorgesehen sein, dass die Körper einen Anteil an SiO₂ unter 30 Masse-% aufweisen, bezogen auf die Gesamtmasse der Körper, bevorzugter unter 20, noch bevorzugter unter 10 Masse-%, noch bevorzugter unter 5 Masse-%, noch bevorzugter unter 3 Masse-% und noch bevorzugter 1 Masse-%.

Ebenfalls um den Anteil an Schmelzphasen in den Körpern möglichst gering zu halten, kann vorgesehen sein, dass die Körper einen Anteil an Glasphasen unter 10 Masse-% aufweisen, bezogen auf die Gesamtmasse der Körper, noch bevorzugter unter 5 Masse-%, noch bevorzugter unter 3 Masse-%, noch bevorzugter unter 2 und noch bevorzugter 1 Masse-%.

Schließlich kann, ebenfalls um den Anteil an Schmelzphasen in den Körpern möglichst gering zu halten, vorgesehen sein, dass die Körper eine Gesamtmasse an Alkalien, insbesondere eine Gesamtmasse an Na₂O, K₂O und Li₂O, unter 3 Masse-% aufweisen, bezogen auf die Gesamtmasse der Körper, noch bevorzugter unter 2 und noch bevorzugter unter 1 Masse-%.

Die Körper des erfindungsgemäßen Versatzes bestehen aus miteinander versinterten Körnern aus wenigstens einem feuerfesten keramischen Rohstoff. Jeder Körper stellt damit einen eigenständigen Sinterkörper dar, der jeweils aus miteinander versinterten Körnern aus einem oder mehreren feuerfesten keramischen Rohstoffen gebildet ist. Diese Sinterkörper stellen einen synthetischen Rohstoff dar, den der erfindungsgemäße Versatz zur Verringerung der Sprödigkeit eines daraus hergestellten feuerfesten Erzeugnisses aufweist.

Grundsätzlich können die Körper aus miteinander versinterten Körnern aus wenigstens einem beliebigen feuerfesten keramischen Rohstoff gebildet sein. Bevorzugt umfassen die Körper miteinander versinterte Körnern aus wenigstens einem der folgenden feuerfesten keramischen Rohstoffe: Magnesia, Spinell, Korund, Zirkonia, Forsterit, Chromerz, Zirkonkorund, Zirkonmullit, Aluminiumtitanat, Magnesiumtitanat oder Calciumtitanat. Nach einer Ausführungsform umfassen die Körper miteinander versinterte Körner aus den vorbezeichneten feuerfesten keramischen Rohstoffen zu wenigstens 90 Masse-%, bevorzugter zu wenigstens 95 oder auch zu 100 Masse-%, jeweils bezogen auf die Gesamtmasse der Körper.

Magnesia (MgO) kann in den Körpern in Form wenigstens eines der Rohstoffe Sintermagnesia oder Schmelzmagnesia vorliegen. Bei "Spinell" handelt es sich um wenigstens ein Mineral aus der Gruppe der Spinelle. Insbesondere kann Spinell in den Körpern in Form wenigstens eines der Minerale Magnesiaspinell (MgAl₂O₄), Herzynit (FeAl₂O₄), Galaxit (MnAl₂O₄), Chromit (FeCr₂O₄), Pleonast ((Mg, Fe)(Al, Fe)₂O₄), Pikrochromit (MgCr₂O₄), Hausmannit (Mn₃O₄), Magnetit (Fe₃O₄) oder Gahnit (ZnAl₂O₄) vorliegen. Korund kann in den Körpern in Form wenigstens eines der Rohstoffe Schmelzkorund, Sinterkorund oder calcinierte Tonerde vorliegen. Zirkonia (ZrO₂) kann in den Körpern voll- oder teilstabilisiert vorliegen, beispielsweise stabilisiert durch wenigstens eines der Oxide CaO, MgO oder Y₂O₃.

Insbesondere können die Körper miteinander versinterte Körner aus wenigstens einem der folgenden feuerfesten keramischen Rohstoffe umfassen: Magnesia, Spinell oder Korund, bevorzugt Magnesiaspinell, Herzynit oder Korund, besonders bevorzugt Magnesiaspinell, Herzynit oder Sinterkorund, und zwar bevorzugt jeweils zu wenigstens 90 Masse-%, bevorzugter zu wenigstens 95 Masse-% oder auch zu 100 Masse-%, jeweils bezogen auf die Gesamtmasse der Körper.

Entsprechend den vorbezeichneten Rohstoffen, können die Körper wenigstens eine der folgenden mineralischen Phasen umfassen: Periklas (MgO), Magnesiaspinell, Herzynit, Galaxit, Chromit, Pleonast, Pikrochromit, Hausmannit, Magnetit oder Gahnit, Korund (Al₂O₃), Zirkonia, Forsterit, Zirkonkorund, Zirkonmullit, Aluminiumtitanat, Magnesiumtitanat oder Calciumtitanat. Insbesondere können die Körper die vorbezeichneten mineralischen Phasen zu wenigstens 90 Masse-%, bevorzugter zu wenigstens 95, noch bevorzugter zu wenigstens 98 Masse-% und noch bevorzugter zu wenigstens 99 Masse-% oder auch zu 100 Masse-%, jeweils bezogen auf die Gesamtmasse der Körper, umfassen.

Nach einer bevorzugten Ausführungsform ist vorgesehen, dass die Körper wenigstens eine der mineralischen Phasen Periklas, Magnesiaspinell, Herzynit oder Korund, besonders bevorzugt Magnesiaspinell, Herzynit oder Korund umfassen, und zwar bevorzugt jeweils zu wenigstens 90 Masse-%, bevorzugter zu wenigstens 95 Masse-% und beispielsweise auch zu 100 Masse-%, jeweils bezogen auf die Gesamtmasse der Körper.

Die Körper weisen ein Verhältnis von (Dicke):(Breite):(Länge) von (1):(≥ 1 und ≤ Länge):(≥ 3) auf. Mit andern Worten: Die Breite des Körpers ist größer oder gleich der Dicke des Körpers und kleiner oder gleich der Länge des Körpers; ferner ist die Länge des Körpers größer oder gleich der dreifachen Dicke des Körpers.

Die Körper weisen damit im Wesentlichen eine stiftförmige oder eine plattenförmige Geometrie auf. Ob die Körper im Wesentlichen eine solch stiftförmige oder eine plattenförmige Geometrie aufweisen, hängt vom Verhältnis der Breite zu Dicke und Länge der Körper ab. Ist die Breite gleich oder nur geringfügig größer als die Dicke des Körpers, weist der Körper im Wesentlichen eine stiftförmige Form auf. Ist die Breite hingegen größer und insbesondere nur geringfügig kleiner oder gleich der Länge des Körpers, weist der Körper im Wesentlichen eine plattenförmige Form auf.

Nach einer bevorzugten Ausführungsform, weisen die Körper ein Verhältnis von (Dicke):(Breite):(Länge) von (1):(1 bis 5):(3 bis 5) auf, wobei die Breite, wie zuvor ausgeführt, kleiner oder gleich der Länge des Körpers ist.

Erfindungsgemäß hat sich herausgestellt, dass die Körper bei dem erfindungsgemäßen Verhältnis von Dicke zu Breite zu Länge ihre elastifizierende Wirkung insbesondere ab eine Länge von 1 mm besonders wirkungsvoll entfalten. Die Erfinder vermuten, dass die Körper erst ab etwa dieser Länge ein ausreichendes Spannungsfeld um die Körper aufbauen, das zu Mikrorissen in dem feuerfesten Erzeugnis führt. Ferner wurde erfindungsgemäß festgestellt, dass die Körper ab dieser Länge Makrorisse im Erzeugnis, die zur Beschädigung oder gar Zerstörung des Erzeugnisses führen könnten, ab einer Länge von etwa 1 mm wirksam überbrücken können. Insoweit können die Körper eine Rißausbreitung im Erzeugnis, die zu dessen Beschädigung führen könnte, hemmen oder sogar verhindern. Ferner hat sich erfindungsgemäß herausgestellt, dass die Körper ab einer Länge von etwa 30 mm bei der Herstellung eines feuerfesten Erzeugnisses unter Verwendung der Körper leicht brechen, so dass die Körper nicht mehr mit einer definierten Länge im Versatz sowie dem daraus hergestellten feuerfesten Erzeugnis vorliegen. Vor diesem Hintergrund weisen die Körper nach einer bevorzugten Ausführungsform eine Länge im Bereich von 1 bis 30 mm auf. Insoweit können die Körper bevorzugt eine Länge von höchstens 30 mm, bevorzugter von höchstens 25 mm, noch bevorzugter von höchstens 20 mm und noch bevorzugter von höchstens 15 mm aufweisen. Ferner können die Körper bevorzugt eine Länge von wenigstens 1 mm aufweisen, bevorzugter eine Länge von wenigstens 2 mm, noch bevorzugter von wenigstens 3 mm, noch bevorzugter von wenigstens 5 mm, noch bevorzugter von wenigstens 8 mm und noch bevorzugter von wenigstens 10 mm. Besonders bevorzugt weisen die Körper eine Länge im Bereich von 3 bis 15 mm und ganz besonders bevorzugt eine Länge im Bereich von 5 bis 15 mm auf.

Erfindungsgemäß hat sich herausgestellt, dass die Wirkung der Körper als Elastifizierer insbesondere vom Verhältnis ihrer Länge zum Korndurchmesser der Körner der Rohstoffe der Grundkomponente abhängen kann. Erfindungsgemäß hat sich dabei herausgestellt, dass die Körper ihre Wirkung als Mikrorissbildner und damit Elastifizierer insbesondere dann besonders vorteilhaft entfalten, wenn die Grundkomponente aus wenigstens einem feuerfesten keramischen Rohstoff in Form von Körnern vorliegt und die Körper eine Länge aufweisen, die wenigstens der Länge des mittleren Korndurchmessers der größten Körner der Grundkomponente entspricht. Mit anderen Worten: Die Körper weisen wenigstens die Länge des mittleren Korndurchmessers der größten Körner der Grundkomponente auf.

Der mittlere Korndurchmesser der größten Körner der Grundkomponente kann insbesondere bestimmt sein gemäß DIN EN ISO 13383-1:2016-11.

Erfindungsgemäß hat sich herausgestellt, dass die Körper ihre Wirkung als Elastifizierer insbesondere dann in vorteilhafter Weise in einem feuerfesten Erzeugnis entfalten, wenn sie in einem spezifischen Volumenanteil im Versatz beziehungsweise dem daraus hergestellten Erzeugnis vorliegen. Insoweit kann vorgesehen sein, dass die Körper in einem Anteil im Bereich vom 0,5 bis 30 Volumen-%, bezogen auf das Gesamtvolumen des Versatzes, im Versatz vorliegen. Insoweit kann vorgesehen sein, dass die Körper in einem Volumenanteil von wenigstens 0,5 Volumen-%, bezogen auf das Gesamtvolumen des Versatzes, bevorzugter in einem Volumenanteil von wenigstens 1 Volumen-%, noch bevorzugter von wenigstens 1,5 Volumen-% und noch bevorzugter in einem Volumenanteil von wenigstens 2 Volumen-% im Versatz vorliegen. Ferner kann vorgesehen sein, dass die Körper in einem Volumenanteil von höchstens 30 Volumen-%, bezogen auf das Gesamtvolumen des Versatzes, bevorzugter in einem Volumenanteil von höchstens 25 Volumen-%, noch bevorzugter von höchstens 20 Volumen-% und noch bevorzugter in einem Volumenanteil von höchstens 15 Volumen-% im Versatz vorliegen. Insoweit können die Körper bevorzugt in einem Anteil im Bereich von 1 bis 20 Volumen-% im Versatz vorliegen, bevorzugter in einem Volumenanteil im Bereich von 1 bis 15 Volumen-% und noch bevorzugter in einem Volumenanteil im Bereich von 2 bis 15 Volumen-%, jeweils bezogen auf das Gesamtvolumen des Versatzes. Erfindungsgemäß hat sich herausgestellt, dass die Körper ihre Wirkung als Elastifizierer nicht oder nur in ungenügendem Ausmaß entfalten können, wenn sie unterhalb der vorbezeichneten Massenanteile im Versatz beziehungsweise dem daraus hergestellten Erzeugnis vorliegen. Ferner hat sich erfindungsgemäß herausgestellt, dass die Mikrorissbildung durch die Körper im Erzeugnis zu umfangreich werden kann, wenn die Körper oberhalb der vorbezeichneten Anteile im Versatz vorliegen. Durch eine zu umfangreiche Mikrorissbildung kann die Festigkeit des Erzeugnisses jedoch verschlechtert werden.

Soweit hierin gemachte Angaben in Volumen-% bezogen sind auf das Gesamtvolumen des Versatzes, ist das Gesamtvolumen des Versatzes das Schüttvolumen des Versatzes.

Die Grundkomponente kann in einem Volumenanteil im Bereich von 70 bis 99,5 Volumen-%, bezogen auf das Gesamtvolumen des Versatzes, im Versatz vorliegen. Insoweit kann die Grundkomponente beispielsweise in einem Volumen von höchstens 99,5 Volumen-%, bezogen auf die Gesamtmasse des Versatzes, bevorzugter in einem Massenanteil von höchstens 99 Volumen-%, noch bevorzugter in einem Volumenanteil von höchstens 98,5 Volumen-% und noch bevorzugter in einem Volumenanteil von höchstens 98 Volumen-% im Versatz vorliegen. Bevorzugt kann die Grundkomponente in einem Volumenanteil im Bereich von 80 bis 99 Volumen-%, bevorzugter in einem Volumenanteil im Bereich von 85 bis 99 Volumen-% und noch bevorzugter in einem Volumenanteil im Bereich von 85 bis 98 Volumen-%, jeweils bezogen auf das Gesamtvolumen des Versatzes, im Versatz vorliegen.

Soweit im Einzelfall nicht anders angegeben, sind hierin gemachte Angaben zu Volumenanteilen oder Massenanteilen einer Komponente, die auf das Gesamtvolumen oder die Gesamtmasse des Versatzes bezogen sind, bezogen auf das Gesamtvolumen beziehungsweise die Gesamtmasse des Versatzes ohne etwaige Volumen- oder Massenanteile an freiem Kohlenstoff, die der Versatz ebenfalls aufweisen kann. Freier Kohlenstoff kann bekanntermaßen insbesondere in Form von Graphit, Ruß oder dergleichen Kohlenstoffträgern vorliegen.

Es kann vorgesehen sein, dass sich die Körper und die Grundkomponente zu 100 Masse-%, also die Gesamtmasse des Versatzes, addieren. Bei dieser Ausführungsform weist der Versatz neben der Grundkomponente und den Körpern damit - neben etwaigen Aneilen an freiem Kohlenstoff - keine weiteren Komponenten auf.

Nach einer Ausführungsform ist vorgesehen, dass der Versatz neben der Grundkomponente und den Körpern weitere Komponenten in einem Volumenanteil unter 10 Volumen-%, bezogen auf das Gesamtvolumen des Versatzes, aufweist, bevorzugter unter 9 Volumen-%, noch bevorzugter unter 5 Volumen % und noch bevorzugter unter 1 Volumen-%.

Soweit der Versatz zur Herstellung eines gesinterten feuerfesten keramischen Erzeugnisses dient, kann insbesondere vorgesehen sein, dass der Versatz Anteile an freiem Kohlenstoff unter 10 Masse-% aufweist, bezogen auf die Gesamtmasse des Versatzes ohne den freien Kohlenstoff, bevorzugter unter 5 Masse-% und noch bevorzugter unter 1 Masse-%.

Soweit der Versatz zur Herstellung eines gesinterten feuerfesten keramischen Erzeugnisses dient, kann entsprechend kann vorgesehen sein, dass sich die Körper und die Grundkomponente zu wenigstens 90 Masse-% addieren, bevorzugter zu 95 Masse-% und noch bevorzugter zu wenigstens 99 Masse-%, jeweils bezogen auf die Gesamtmasse des Versatzes.

Soweit der Versatz zur Herstellung eines kohlenstoffgebundenen feuerfesten Erzeugnisses oder zur Herstellung eines feuerfesten Erzeugnisses mit einer Mischbindung (also mit keramischer Bindung und Kohlenstoffbindung) dient, kann insbesondere vorgesehen sein, dass der Versatz Anteile an freiem Kohlenstoff bis maximal 30 Masse-% aufweist, bezogen auf die Gesamtmasse des Versatzes ohne den freien Kohlenstoff, bevorzugt einen Anteil im Bereich von 1 bis 30 Masse-%, bevorzugter in einem Anteil im Bereich von 3 bis 30 Masse-%.

Soweit der Versatz zur Herstellung eines kohlenstoffgebundenen feuerfesten Erzeugnisses oder zur Herstellung eines feuerfesten Erzeugnisses mit einer Mischbindung dient, kann vorgesehen sein, dass sich die Körper, die Grundkomponente und freier Kohlenstoff zu wenigstens 90 Masse-% addieren, bevorzugter zu 95 Masse-% und noch bevorzugter zu wenigstens 99 Masse-%, jeweils bezogen auf die Gesamtmasse des Versatzes.

Erfindungsgemäß kann die Grundkomponente wenigstens einen der folgenden feuerfesten keramischen Rohstoffe umfassen: Magnesia, Doloma, Spinell (insbesondere Magnesiaspinell), Korund, Forsterit, Chromit, Chromkorund, Magnesia-Chromit oder Mullit, und zwar bevorzugt zu wenigstens 90 Masse-%, bevorzugter zu wenigstens 95, noch bevorzugter zu wenigstens 99 Masse-% oder auch zu 100 Masse-%, jeweils bezogen auf die Gesamtmasse der Grundkomponente.

Bevorzugt kann insbesondere vorgesehen sein, dass die Grundkomponente solche Rohstoffe umfasst, aufgrund derer ein aus dem erfindungsgemäßen Versatz hergestelltes feuerfestes keramisches Erzeugnis hoch feuerfest ist. Insoweit kann insbesondere vorgesehen sein, dass die Grundkomponente die Rohstoffe Forsterit und/oder Mullit nicht oder nur in geringem Umfang umfasst. Insoweit kann die Grundkomponente bevorzugt auch wenigstens einen der folgenden feuerfesten keramischen Rohstoffe umfassen: Magnesia, Doloma, Spinell (insbesondere Magnesiaspinell), Korund, Chromit, Chromkorund oder Magnesia-Chromit, weiter bevorzugt Magnesia, Doloma, Magnesiaspinell oder Korund, bevorzugter Magnesia und noch bevorzugter Sintermagnesia, und zwar bevorzugt jeweils zu wenigstens 90 Masse-%, noch bevorzugter zu wenigstens 95 Masse-%, noch bevorzugter zu wenigstens 98 Masse-% und noch bevorzugter zu wenigstens 99 Masse-% oder auch zu 100 Masse-%, jeweils bezogen auf die Gesamtmasse der Grundkomponente.

Soweit die Grundkomponente in Form von Magnesia vorliegt, kann diese in Form wenigstens eines der Rohstoffe Sintermagnesia oder Schmelzmagnesia vorliegen. Soweit die Grundkomponente in Form von Doloma vorliegt, kann dieses beispielsweise in Form wenigstens eines der Rohstoffe Sinterdoloma oder Schmelzdoloma vorliegen. Soweit die Grundkomponente in Form von Korund vorliegt, kann dieses in Form wenigstens einer der Rohstoffe Schmelzkorund, Sinterkorund oder calcinierte Tonerde vorliegen.

Es kann vorgesehen sein, dass die Grundkomponente ausschließlich aus basischen Rohstoffen besteht, also aus Rohstoffen auf Basis MgO, also insbesondere aus wenigstens einem der folgenden feuerfesten keramischen Rohstoffe: Magnesia, Doloma, Spinell (insbesondere Magnesiaspinell) oder Forsterit.

Die Grundkomponente besteht zu wenigstens 50 Masse-%, bezogen auf die Gesamtmasse der Grundkomponente, aus MgO, bevorzugter zu wenigstens 60, noch bevorzugter zu wenigstens 70 Masse-%, noch bevorzugter zu wenigstens 80 Masse-% und noch bevorzugter zu wenigstens 90 Masse-%.

Die Grundkomponente beziehungsweise die Rohstoffe der Grundkomponente liegen bevorzugt in körniger Form vor, also in Form von Körnern. Bei diesen Körnern handelt es sich insbesondere um einzelne, also nicht miteinander versinterte Körner.

Bevorzugt ist vorgesehen, dass die Körner der Grundkomponente einen Maximalkorndurchmesser, also Körner mit einem mittleren Korndurchmesser von maximal 10 mm aufweisen. Der mittlere Korndurchmesser der größten Körner der Rohstoffe, aus denen die Grundkomponente besteht, beträgt nach einer Ausführungsform maximal 10 mm, bevorzugter maximal 8 mm, noch bevorzugter maximal 6 mm und noch bevorzugter maximal 5 mm. Der mittlere Korndurchmesser der größten Körner ist bestimmt gemäß DIN EN 623-3:2003.

Wie jedes feuerfeste Erzeugnis, weisen auch die Körper des erfindungsgemäßen Versatzes ein bestimmtes Gefüge auf.

Ferner bildet auch die Grundkomponente des erfindungsgemäßen Versatzes - durch einen Brand des erfindungsgemäßen Versatzes - ein bestimmtes Gefüge aus.

Erfindungsgemäß wird unter dem Begriff "Gefüge" im Sinne der üblichen Definition dieses Begriffs im Bereich der Keramik sowohl die Art und Menge der Phasen als auch deren Größe, Form, Orientierung und Verteilung im keramischen Erzeugnis verstanden.

Bevorzugt ist erfindungsgemäß vorgesehen, dass die Grundkomponente sowie die Körper derart im Versatz vorliegen, dass sich in einem aus dem Versatz durch einen Brand hergestellten feuerfesten Erzeugnis der aus der Grundkomponente gebildete Bereich des Erzeugnisses einerseits und die aus den Körpern gebildeten Bereiche des Erzeugnisses andererseits hinsichtlich ihres jeweiligen Gefüges unterscheiden. Mit anderen Worten: In einem durch einen Brand des erfindungsgemäßen Versatzes hergestellten feuerfesten Erzeugnis weist der aus der Grundkomponente gebildete Bereich ein anderes Gefüge auf als die aus den Körpern gebildeten Bereiche.

Erfindungsgemäß wurde festgestellt, dass nicht nur die Geometrie der Körper einen Einfluss auf deren Wirksamkeit als Elastifizierer haben kann, sondern auch deren Gefüge. Dabei wurde festgestellt, dass die Körper in einem aus dem erfindungsgemäßen Versatz hergestellten feuerfesten Erzeugnis umso stärker Mikrorisse bilden, also um so stärker als Elastifizierer wirken, umso stärker sich das Gefüge der Körper vom Gefüge des aus der Grundkomponente gebildeten Bereiches unterscheidet. Aus diesem Grund kann vorgesehen sein, dass die Körper ein anderes Gefüge aufweisen als ein Gefüge, das sich aus der Grundkomponente nach einem Brand des erfindungsgemäßen Versatzes in einem hieraus hergestellten feuerfesten Erzeugnis bildet. Um dieses Ziel zu erreichen, stehen dem Fachmann zahlreiche Möglichkeiten aus dem Stand der Technik zur Verfügung. Insbesondere ist dem Fachmann bekannt, dass sich das Gefüge eines feuerfesten Erzeugnisses in Abhängigkeit von der Art und Beschaffenheit der zur Ausbildung des Gefüges verwendeten Rohstoffe bildet, also insbesondere der Art der verwendeten Rohstoffe, deren jeweiligem Massenanteil sowie deren jeweiliger Korngröße.

Gegenstand der Erfindung ist auch ein Verfahren zur Herstellung eines feuerfesten Erzeugnisses, welches die folgenden Merkmale umfasst:
Zur Verfügungstellung eines erfindungsgemäßen Versatzes;
Brennen des Versatzes zu einem feuerfesten Erzeugnis.

Der für das erfindungsgemäße Verfahren zur Verfügung gestellte, erfindungsgemäße Versatz kann gemischt werden, beispielsweise in einer Mischvorrichtung, beispielsweise in einem Zwangsmischer. Hierdurch ist eine innigliche Vermischung der Körper sowie der Rohstoffe der Grundkomponente möglich, so dass die Körper regellos und gleichmäßig über das Volumen des Versatzes und damit auch über das Volumen des aus dem Versatz herstellbaren feuerfesten Erzeugnisses verteilt sind. Vor und/oder während des Mischens des Versatzes kann diesem ein üblicher Binder zugegeben werden, insbesondere ein Grünbinder, beispielsweise Ligninsulfonat. Dieser Grünbinder kann insbesondere dazu dienen, einem aus dem Versatz geformten Grünkörper eine Grünfestigkeit zu verleihen.

Der, gegebenenfalls gemischte, Versatz kann, beispielsweise durch Pressen, zu einem geformten Körper, einem so genannten Grünkörper, geformt werden.

Der Grünkörper kann getrocknet werden, beispielsweise in einem Trockenaggregat, beispielsweise in einem Trockenofen.

Der, gegebenenfalls zu einem Grünkörper geformte und gegebenenfalls getrocknete, Versatz kann anschließend zu einem feuerfesten Erzeugnis gebrannt werden. Der Brand kann insbesondere in einem Ofen durchgeführt werden.

Soweit der erfindungsgemäße Versatz zur Herstellung eines feuerfesten keramischen Erzeugnisses dient, wird der Brand als Sinterbrand durchgeführt, bei der die Komponenten des Versatzes miteinander versintern. Das Brennen des Versatzes kann bei den für eine Versinterung der Komponenten des Versatzes geeigneten Temperaturen durchgeführt werden. Diese werden in Abhängigkeit von Art und Beschaffenheit der Komponenten des Versatzes gewählt. Beispielsweise kann der Brand bei Temperaturen im Bereich zwischen 1.400 und 1.600°C durchgeführt werden.

Soweit der erfindungsgemäße Versatz zur Herstellung eines feuerfesten kohlenstoffgebundenen Erzeugnisses dient, wird der Brand derart durchgeführt, dass der Kohlenstoff des Versatzes eine Kohlenstoffbindung ausbildet, der die Komponenten des Versatzes miteinander verbindet. Das Brennen des Versatzes kann bei den für die Ausbildung einer Kohlenstoffbindung geeigneten Temperaturen durchgeführt werden. Diese werden in Abhängigkeit von Art und Beschaffenheit der Komponenten des Versatzes gewählt. Beispielsweise kann der Brand bei Temperaturen im Bereich zwischen 1.400 und 1.600°C in reduzierender Atmosphäre durchgeführt werden.

Nach dem Brennen des Versatzes lässt man diesen abkühlen. Nach dem Abkühlen erhält man ein feuerfestes Erzeugnis.

Gegenstand der Erfindung ist auch ein feuerfestes Erzeugnis, welches insbesondere durch ein erfindungsgemäßes Verfahren hergestellt sein kann, und welches die folgenden Merkmale umfasst:
Einen ersten Bereich aus miteinander verbundenen Körnern aus wenigstens einem feuerfesten keramischen Rohstoff, wobei der erste Bereich Periklas umfasst; sowie
zweite Bereiche, wobei die zweiten Bereiche die folgenden Merkmale aufweisen:
   Die zweiten Bereiche bestehen aus miteinander versinterten Körnern aus wenigstens einem feuerfesten keramischen Rohstoff, wobei die zweiten Bereiche einen Anteil an Tonmineralien unter 10 Masse-%, bezogen auf die Gesamtmasse der zweiten Bereiche, aufweisen;
   die zweiten Bereiche weisen ein Verhältnis von (Dicke):(Breite):(Länge) von (1):(≥ 1 und ≤ Länge):(≥ 3) auf;
   die zweiten Bereiche sind ohne Ordnung im ersten Bereich angeordnet;
   der erste Bereich einerseits und die zweiten Bereiche andererseits unterscheiden sich hinsichtlich ihres jeweiligen Gefüges.

Soweit das erfindungsgemäße feuerfeste Erzeugnis aus einem erfindungsgemäßen Versatz durch das erfindungsgemäße Verfahren hergestellt ist, ist der erste Bereich durch den Brand aus der Grundkomponente sowie die zweiten Bereiche durch den Brand aus den Körpern gebildet.

Soweit das Erzeugnis als feuerfestes keramisches Erzeugnis vorliegt, sind die Körner des ersten Bereichs über eine Sinterbindung miteinander verbunden beziehungsweise liegt der erste Bereich aus miteinander versinterten Körnern aus wenigstens einem feuerfesten keramischen Rohstoff vor. Soweit das Erzeugnis als feuerfestes kohlenstoffgebundenes Erzeugnis vorliegt, sind die Körner des ersten Bereichs über eine Kohlenstoffbindung miteinander verbunden beziehungsweise liegt der erste Bereich aus miteinander über eine Kohlenstoffbindung verbunden Körnern aus wenigstens einem feuerfesten keramischen Rohstoff vor.

Der erste Bereich bildet während des Brandes insoweit eine Matrix aus, in die die Körper als zweite Bereiche des feuerfesten Erzeugnisses eingebettet sind. Insbesondere sind die zweiten Bereiche inselartig in die aus der Grundkomponente gebildete Matrix eingebettet, also in Form kleiner, von einander isolierter Bereiche.

Dabei entfalten die zweiten Bereiche im feuerfesten Erzeugnis ihre oben erläuterte Wirkung als Elastifizierer, was durch ein signifikant geringes Elastizitätsmodul des feuerfesten Erzeugnisses indiziert ist.

Erfindungsgemäß wurde jedoch auch festgestellt, dass sich die feuerfesten Eigenschaften eines solch zweite Bereiche mit einem anderen Gefüge umfassenden, feuerfesten keramischen Erzeugnisses verschlechtern können, insbesondere sich die Hochfeuerfestigkeit eines solchen Erzeugnisses verschlechtern kann. So zeigen sich insbesondere verschlechterter Werte für das Druckerweichen eines solchen Erzeugnisses, wenn die Zusammensetzung der Bereiche insoweit vorliegt, als diese bereits bei verhältnismäßig niedrigen Anwendungstemperaturen des Erzeugnisses Schmelzphasen bilden. Insoweit wurde erfindungsgemäß festgestellt, dass die zweiten Bereiche einen Anteil an Tonmineralen unter 10 Masse-% aufweisen sollten, so dass die zweiten Bereiche bei verhältnismäßig niedrigen Temperaturen, also insbesondere bereits bei Temperaturen unter 1.400°C oder bevorzugter unter 1.450°C, keine solchen Mengen an niedrig schmelzenden Phasen ausbilden, die die Temperaturbeständigkeit des Erzeugnisses negativ beeinträchtigen.

Das erfindungsgemäße feuerfeste keramische Erzeugnis weist bevorzugt Werte für ein Druckerweichen T_{0,5} von >1.400°C, bevorzugter von >1.450°C und noch bevorzugter >1.500°C auf. Der Wert für das Druckerweichen ist bestimmt gemäß DIN EN ISO 1893:2008-09.

Unter Tonmineralen werden hierin insbesondere Alumosilikate verstanden, insbesondere Tonminerale der Kaolingruppe, insbesondere Kaolinit. Um die feuerfesten Eigenschaften eines erfindungsgemäßen feuerfesten keramischen Erzeugnisses hinsichtlich seines Druckerweichens nicht zu verschlechtern, ist insoweit vorgesehen, dass die zweiten Bereiche einen Anteil an Tonmineralen unter 10 Masse-% aufweisen und besonders bevorzugt einen möglichst nahe an einem Anteil an 0 Masse-% liegenden Anteil an Tonmineralen aufweisen, also bevorzugter unter 9, noch bevorzugter unter 5 Masse-%, noch bevorzugter unter 3 Masse-%, noch bevorzugter unter 2 Masse-% und noch bevorzugter unter 1 Masse-%, jeweils bezogen auf die Gesamtmasse der zweiten Bereiche.

Erfindungsgemäß wurde festgestellt, dass sich insbesondere die feuerfesten Eigenschaften eines erfindungsgemäßen feuerfesten keramischen Erzeugnisses hinsichtlich seines Druckerweichens verschlechtern, wenn die zweiten Bereiche einen Anteil an dem Tonmineral Mullit aufweist. Erfindungsgemäß ist daher bevorzugt vorgesehen, dass die zweiten Bereiche einen Anteil an Mullit unter 7 Masse-% aufweist, bevorzugter unter 3 Masse-% und noch bevorzugter unter 1 Masse-%, jeweils bezogen auf die Gesamtmasse der zweiten Bereiche.

Ebenfalls um den Anteil an etwaig in den zweiten Bereiche gebildeten Schmelzphasen möglichst gering zu halten, kann vorgesehen sein, dass die zweiten Bereiche jeweils einen Anteil an SiO₂ unter 30 Masse-% aufweisen, bezogen auf die Gesamtmasse der zweiten Bereiche, insbesondere auch unter 20, bevorzugter unter 10 Masse-%, noch bevorzugter unter 5 Masse-%, noch bevorzugter unter 3 Masse-% und noch bevorzugter unter 1 Masse-%.

Ebenfalls um den Anteil an Schmelzphasen in den zweiten Bereichen möglichst gering zu halten, kann vorgesehen sein, dass die zweiten Bereiche einen Anteil an Glasphasen unter 10 Masse-% aufweisen, bezogen auf die Gesamtmasse der zweiten Bereiche, bevorzugter unter 5 Masse-%, noch bevorzugter unter 3 Masse-% und noch bevorzugter unter 1 Masse-%.

Schließlich kann, ebenfalls um den Anteil an Schmelzphasen in den zweiten Bereiche möglichst gering zu halten, vorgesehen sein, dass die zweiten Bereiche eine Gesamtmasse an Alkalien, insbesondere eine Gesamtmasse an Na₂O, K₂O und Li₂O, unter 3 Masse-% aufweisen, bezogen auf die Gesamtmasse der zweiten Bereiche, bevorzugter unter 2 Masse-% und noch bevorzugter unter 1 Masse-%.

Die zweiten Bereiche des erfindungsgemäßen Erzeugnisses bestehen aus miteinander versinterten Körnern aus wenigstens einem feuerfesten keramischen Rohstoff.

Grundsätzlich können die zweiten Bereiche aus miteinander versinterten Körnern aus einem beliebigen feuerfesten keramischen Rohstoff gebildet sein. Bevorzugt bestehen die zweiten Bereiche aus wenigstens einem der folgenden feuerfesten keramischen Rohstoffe: Magnesia, Spinell, Korund, Zirkonia, Forsterit, Chromerz, Zirkonkorund, Zirkonmullit, Aluminiumtitanat, Magnesiumtitanat oder Calciumtitanat, und zwar bevorzugt zu wenigstens 90 Masse-%, bevorzugter zu wenigstens 95 Masse-% oder auch zu 100 Masse-%, jeweils bezogen auf die Gesamtmasse der zweiten Bereiche.

Magnesia (MgO) kann in den zweiten Bereichen Form wenigstens eines der Rohstoffe Sintermagnesia oder Schmelzmagnesia vorliegen. Bei Spinell handelt es sich um wenigstens ein Mineral aus der Gruppe der Spinelle. Insbesondere kann Spinell in Form wenigstens eines der Minerale Magnesiaspinell (MgAl₂O₄), Herzynit (FeAl₂O₄), Galaxit (MnAl₂O₄), Chromit (FeCr₂O₄), Pleonast ((Mg, Fe)(Al, Fe)₂O₄), Pikrochromit (MgCr₂O₄), Hausmannit (Mn₃O₄), Magnetit (Fe₃O₄) oder Gahnit (ZnAl₂O₄) vorliegen. Korund kann in Form wenigstens eines der Rohstoffe Schmelzkorund, Sinterkorund oder calcinierte Tonerde vorliegen. Zirkonia (ZrO₂) kann voll- oder teilstabilisiert vorliegen, beispielsweise stabilisiert durch wenigstens eines der Oxide CaO, MgO oder Y₂O₃.

Insbesondere können die zweiten Bereiche aus miteinander versinterten Körnern aus wenigstens einem der folgenden feuerfesten keramischen Rohstoffe bestehen: Magnesia, Spinell oder Korund, bevorzugt Magnesiaspinell, Herzynit oder Korund, besonders bevorzugt Magnesiaspinell, Herzynit oder Sinterkorund, und zwar bevorzugt jeweils zu wenigstens 90 Masse-%, bevorzugter zu wenigstens 95 Masse-% oder auch zu 100 Masse-%, jeweils bezogen auf die Gesamtmasse der zweiten Bereiche.

Entsprechend den vorbezeichneten Rohstoffen, können die zweiten Bereiche wenigstens eine der folgenden mineralischen Phasen umfassen: Periklas (MgO), Magnesiaspinell, Herzynit, Galaxit, Chromit, Pleonast, Pikrochromit, Hausmannit, Magnetit oder Gahnit, Korund (Al₂O₃), Zirkonia, Forsterit, Zirkonkorund, Zirkonmullit, Aluminiumtitanat, Magnesiumtitanat oder Calciumtitanat. Insbesondere können die zweiten Bereiche die vorbezeichneten mineralischen Phasen zu wenigstens 90 Masse-%, bevorzugter wenigstens 95 Masse-%, noch bevorzugter zu wenigstens 98 Masse-% und noch bevorzugter zu wenigstens 99 Masse-% oder auch zu 100 Masse-%, umfassen, jeweils bezogen auf die Gesamtmasse der zweiten Bereiche.

Nach einer bevorzugten Ausführungsform ist vorgesehen, dass die zweiten Bereiche wenigstens eine der mineralischen Phasen Periklas, Magnesiaspinell, Herzynit oder Korund, besonders bevorzugt Magnesiaspinell, Herzynit oder Korund umfassen, und zwar bevorzugt jeweils zu wenigstens 90 Masse-%, bevorzugter zu wenigstens 95 Masse-% und beispielsweise auch zu 100 Masse-%, jeweils bezogen auf die Gesamtmasse der zweiten Bereiche.

Die zweiten Bereiche weisen ein Verhältnis von (Dicke):(Breite):(Länge) von (1):(≥ 1 und ≤ Länge):(≥ 3) auf. Mit andern Worten: Die Breite der zweiten Bereiche ist größer oder gleich der Dicke der zweiten Bereiche und kleiner oder gleich der Länge der zweiten Bereiche; ferner ist die Länge der zweiten Bereiche größer oder gleich der dreifachen Dicke der zweiten Bereiche.

Die zweiten Bereiche weisen damit im Wesentlichen eine stiftförmige oder eine plattenförmige Geometrie auf. Ob die zweiten Bereiche im Wesentlichen eine solch stiftförmige oder eine plattenförmige Geometrie aufweisen, hängt vom Verhältnis der Breite zu Dicke und Länge der zweiten Bereiche ab. Ist die Breite gleich oder nur geringfügig größer als die Dicke des jeweiligen zweiten Bereichs, weist der zweite Bereich im Wesentlichen eine stiftförmige Form auf. Ist die Breite hingegen größer und insbesondere nur geringfügig kleiner oder gleich der Länge des zweiten Bereichs, weist der zweite Bereich im Wesentlichen eine plattenförmige Form auf.

Nach einer bevorzugten Ausführungsform, weisen die zweiten Bereiche ein Verhältnis von (Dicke):(Breite):(Länge) von (1):(1 bis 5):(3 bis 5) auf, wobei die Breite, wie zuvor ausgeführt, kleiner oder gleich der Länge des zweiten Bereichs ist.

Wie oben in Hinblick auf die Körper des Versatzes entsprechend ausgeführt, hat sich herausgestellt, dass die zweiten Bereiche ihre elastifizierende Wirkung sowie ihre Wirkung zur Hemmung einer Rißausbreitung im Erzeugnis ab einer Länge von etwa 1 mm besonders wirkungsvoll ausüben können. Ferner hat sich erfindungsgemäß herausgestellt, dass die zweiten Bereiche ab einer Länge von etwa 30 mm leicht brechen können. Vor diesem Hintergrund weisen die zweiten Bereiche nach einer bevorzugten Ausführungsform eine Länge im Bereich von 1 bis 30 mm auf. Insoweit können die zweiten Bereiche bevorzugt eine Länge von höchstens 30 mm, bevorzugter von höchstens 25 mm, noch bevorzugter von höchstens 20 mm und noch bevorzugter von höchstens 15 mm aufweisen. Ferner können die zweiten Bereiche bevorzugt eine Länge von wenigstens 1 mm aufweisen, bevorzugter eine Länge von wenigstens 2 mm, noch bevorzugter von wenigstens 3 mm, noch bevorzugter von wenigstens 5 mm, noch bevorzugter von wenigstens 8 mm und noch bevorzugter von wenigstens 10 mm. Besonders bevorzugt weisen die zweiten Bereiche eine Länge im Bereich von 3 bis 15 mm und noch bevorzugter eine Länge im Bereich von 5 bis 15 mm auf.

Erfindungsgemäß hat sich herausgestellt, dass die Wirkung der zweiten Bereiche als Elastifizierer insbesondere vom Verhältnis ihrer Länge zum Korndurchmesser der Körner der Rohstoffe des ersten Bereichs abhängen kann. Erfindungsgemäß hat sich dabei herausgestellt, dass die zweiten Bereiche ihre Wirkung als Mikrorissbildner und damit Elastifizierer insbesondere dann besonders vorteilhaft entfalten, wenn der erste Bereich aus wenigstens einem feuerfesten keramischen Rohstoff in Form von miteinander versinterten Körnern vorliegt und die zweiten Bereiche eine Länge aufweisen, die wenigstens der Länge des mittleren Korndurchmessers der größten Körner des ersten Bereichs entspricht. Mit anderen Worten: Die zweiten Bereiche weisen jeweils wenigstens die Länge des mittleren Korndurchmessers der größten Körner des ersten Bereichs auf.

Der mittlere Korndurchmesser der größten Körner des ersten Bereichs kann insbesondere bestimmt sein gemäß DIN EN 623-3:2003.

Erfindungsgemäß hat sich herausgestellt, dass die zweiten Bereiche ihre Wirkung als Elastifizierer insbesondere dann in vorteilhafter Weise in einem feuerfesten Erzeugnis entfalten, wenn sie in einem spezifischen Volumenanteil im Erzeugnis vorliegen. Insoweit kann vorgesehen sein, dass die zweiten Bereiche in einem Volumen im Bereich vom 0,5 bis 30 Volumen-%, bezogen auf das Gesamtvolumen des Erzeugnisses, im Erzeugnis vorliegen. Insoweit kann vorgesehen sein, dass die zweiten Bereiche in einem Volumenanteil von wenigstens 0,5 Volumen-%, bezogen auf das Gesamtvolumen des Erzeugnisses, bevorzugter in einem Volumenanteil von wenigstens 1 Volumen-%, noch bevorzugter von wenigstens 1,5 Volumen-% und noch bevorzugter von wenigstens 2 Volumen-% im Versatz vorliegen. Ferner kann vorgesehen sein, dass die zweiten Bereiche in einem Volumenanteil von höchstens 30 Volumen-%, bezogen auf das Gesamtvolumen des Erzeugnisses, bevorzugter in einem Volumenanteil von höchstens 25 Volumen-%, noch bevorzugter in einem Volumenanteil von höchstens 20 Volumen-% und noch bevorzugter in einem Volumenanteil von höchstens 15 Volumen-% im Erzeugnis vorliegen. Insoweit können die zweiten Bereiche bevorzugt in einem Anteil im Bereich von 1 bis 20 Volumen-% im Erzeugnis vorliegen, bevorzugter in einem Volumenanteil im Bereich von 1 bis 15 Volumen-% und noch bevorzugter in einem Volumenanteil im Bereich von 2 bis 15 Volumen-%, jeweils bezogen auf das Gesamtvolumen des Erzeugnisses. Erfindungsgemäß hat sich herausgestellt, dass die zweiten Bereiche ihre Wirkung als Elastifizierer nicht oder nur in ungenügendem Ausmaß entfalten können, wenn sie unterhalb der vorbezeichneten Volumenanteile im feuerfesten Erzeugnis vorliegen. Ferner hat sich erfindungsgemäß herausgestellt, dass die Mikrorissbildung durch die zweiten Bereiche im Erzeugnis zu umfangreich werden kann, wenn die zweiten Bereiche oberhalb der vorbezeichneten Anteile im Erzeugnis vorliegen. Durch eine zu umfangreiche Mikrorissbildung kann die Festigkeit des Erzeugnisses jedoch verschlechtert werden.

Der erste Bereich kann in einem Volumenanteil im Bereich von 70 bis 99,5 Volumen-%, bezogen auf das Gesamtvolumen des feuerfesten Erzeugnisses, im feuerfesten keramischen Erzeugnis vorliegen. Insoweit kann der erste Bereich beispielsweise in einem Massenanteil von höchstens 99,5 Volumen-%, bezogen auf das Gesamtvolumen des feuerfesten keramischen Erzeugnisses, bevorzugter in einem Volumenanteil von höchstens 99 Volumen-%, noch bevorzugter in einem Volumenanteil von höchstens 98,5 Volumen-% und noch bevorzugter in einem Volumenanteil von höchstens 98 Volumen-% im feuerfesten keramischen Erzeugnis vorliegen. Bevorzugt kann der erste Bereich in einem Volumenanteil im Bereich von 80 bis 99 Volumen-%, bevorzugter in einem Volumenanteil im Bereich von 85 bis 99 Volumen-% und noch bevorzugter in einem Volumenanteil im Bereich von 85 bis 98 Volumen-%, jeweils bezogen auf das Gesamtvolumen des feuerfesten keramischen Erzeugnisses, im feuerfesten keramischen Erzeugnis vorliegen.

Soweit im Einzelfall nicht anders angegeben, sind hierin gemachte Angaben zu Volumenanteilen oder Massenanteilen eines Bereichs beziehungsweise einer Phase, die auf das Gesamtvolumen oder die Gesamtmasse des Erzeugnisses bezogen sind, bezogen auf das Gesamtvolumen beziehungsweise die Gesamtmasse des Erzeugnisses ohne etwaige Volumen- oder Massenanteile an freiem Kohlenstoff, die insbesondere ein erfindungsgemäßes Erzeugnis in Form eines kohlenstoffgebundenen Erzeugnisses ebenfalls aufweisen kann. Freier Kohlenstoff im vorbezeichneten Sinne umfasst verkokten Kohlenstoff sowie über eine Kohlenstoffbindung gebunden vorliegenden Kohlenstoff.

Es kann vorgesehen sein, dass sich der erste Bereich und die zweiten Bereiche zu 100 Masse-%, also die Gesamtmasse des feuerfesten keramischen Erzeugnisses, addieren. Bei dieser Ausführungsform weist das feuerfeste keramische Erzeugnis neben dem ersten Bereich und den zweiten Bereichen - neben etwaigen Anteilen an freiem Kohlenstoff - damit keine weiteren Bereiche beziehungsweise Phasen auf.

Nach einer Ausführungsform ist vorgesehen, dass das feuerfeste keramische Erzeugnis neben dem ersten Bereich und den zweiten Bereichen weitere Bereiche beziehungsweise Phasen in einem Volumenanteil unter 10 das Volumen-%, bezogen auf das Gesamtvolumen des feuerfesten keramischen Erzeugnisses, aufweist, bevorzugter unter 9 Volumen-%, noch bevorzugter unter 5 Volumen-% und noch bevorzugter unter 1 Volumen-%.

Soweit das feuerfeste Erzeugnis in Form eines gesinterten feuerfesten keramischen Erzeugnisses vorliegt, kann insbesondere vorgesehen sein, dass das feuerfeste keramische Erzeugnis Anteile an freiem Kohlenstoff unter 10 Masse-% aufweist, bezogen auf die Gesamtmasse des feuerfesten keramischen Erzeugnisses ohne den freien Kohlenstoff, bevorzugter 5 Masse-% und noch bevorzugter unter 1 Masse-%.

Soweit das feuerfeste Erzeugnis in Form eines kohlenstoffgebundenen feuerfesten Erzeugnisses oder in Form eines feuerfesten Erzeugnisses mit einer Mischbindung (also mit keramischer Bindung und Kohlenstoffbindung) vorliegt, kann insbesondere vorgesehen sein, dass der Versatz Anteile an freiem Kohlenstoff bis maximal 30 Masse-% aufweist, bezogen auf die Gesamtmasse des Erzeugnisses ohne den freien Kohlenstoff, bevorzugt einen Anteil im Bereich von 1 bis 30 Masse-%, bevorzugter in einem Anteil im Bereich von 3 bis 30 Masse-%.

Bevorzugt umfasst der erste Bereich miteinander versinterte Körnern aus wenigstens einem der folgenden feuerfesten keramischen Rohstoffe: Magnesia, Doloma, Spinell (insbesondere Magnesiaspinell), Korund, Forsterit, Chromit, Chromkorund, Magnesia-Chromit oder Mullit, und zwar bevorzugt zu wenigstens 90 Masse-%, bevorzugter zu wenigstens 95, noch bevorzugter zu wenigstens 99 Masse-% oder auch zu 100 Masse-%, jeweils bezogen auf die Gesamtmasse des ersten Bereichs.

Bevorzugt kann insbesondere vorgesehen sein, dass der erste Bereich miteinander versinterte Körnern solcher Rohstoffe umfasst, aufgrund derer ein erfindungsgemäßes feuerfestes keramisches Erzeugnis hoch feuerfest ist. Insoweit kann insbesondere vorgesehen sein, dass der erste Bereich miteinander versinterte Körner der Rohstoffe Forsterit und/oder Mullit nicht oder nur in geringem Umfang umfasst. Insoweit kann der erste Bereich bevorzugt auch miteinander versinterte Körnern aus wenigstens einem der folgenden feuerfesten keramischen Rohstoffe umfassen: Magnesia, Doloma, Spinell (insbesondere Magnesiaspinell), Korund, Chromit, Chromkorund oder Magnesia-Chromit, besonders bevorzugt aus Magnesia, Doloma, Magnesiaspinell oder Korund, weiter besonders bevorzugt aus Magnesia und ganz besonders bevorzugt aus Sintermagnesia, und zwar bevorzugt jeweils zu wenigstens 90 Masse-%, bevorzugter zu wenigstens 95, noch bevorzugter zu wenigstens 98 Masse-%, noch bevorzugter zu wenigstens 99 Masse-% oder auch zu 100 Masse-%, jeweils bezogen auf die Gesamtmasse des ersten Bereichs.

Der erste Bereich umfasst Periklas, und zwar bevorzugt zu wenigstens 90 Masse-%, bevorzugter zu wenigstens 95, noch bevorzugter zu wenigstens 98 Masse-%, noch bevorzugter zu wenigstens 99 Masse-% oder auch zu 100 Masse-%, jeweils bezogen auf die Gesamtmasse der des ersten Bereichs.

Bevorzugt ist vorgesehen, dass die Körner des ersten Bereichs einen Maximalkorndurchmesser von 10 mm aufweisen. Der maximale Korndurchmesser der größten versinterten Körner der Rohstoffe, aus denen der erste Bereich gebildet ist, beträgt nach einer Ausführungsform maximal 10 mm, bevorzugter maximal 8 mm, noch bevorzugter maximal 6 mm und noch bevorzugter maximal 5 mm. Der mittlere Korndurchmesser der größten Körner ist bestimmt gemäß DIN EN 623-3:2003.

Erfindungsgemäß ist vorgesehen, dass sich der erste Bereich einerseits und die zweiten Bereiche andererseits hinsichtlich ihres jeweiligen Gefüges voneinander unterscheiden. Mit anderen Worten: In dem feuerfesten keramischen Erzeugnis weist der erste Bereich ein anderes Gefüge auf als die zweiten Bereiche.

Erfindungsgemäß wurde festgestellt, dass von besonderer Bedeutung für die Wirksamkeit der zweiten Bereiche im Erzeugnis deren Anordnung im Erzeugnis ist. So wurde festgestellt, dass die zweiten Bereiche die Sprödigkeit des Erzeugnisses insbesondere dann besonders wirksam reduzieren können, wenn diese ohne Ordnung in der aus dem ersten Bereich gebildeten Matrix angeordnet sind. Die zweiten Bereiche sind demnach ohne Ordnung, also regellos beziehungsweise ohne einheitliche Ausrichtung über das Volumen des Erzeugnisses verteilt. Denn in diesem Fall können sie gleichmäßig über das Volumen des Erzeugnisses Spannungsfelder aufbauen und damit Mikrorisse erzeugen, durch die die Sprödigkeit des Erzeugnisses verringert und dessen Elastizität erhöht wird. Erfindungsgemäß wurde insoweit festgestellt, dass die zweiten Bereiche in keinem Fall weitgehend oder vollständig einheitlich ausgerichtet, also beispielsweise überwiegend in die gleiche Richtung ausgerichtet, im Erzeugnis vorliegen dürfen, da sich in diesem Fall Spannungsgelder im Erzeugnis aufbauen können, die zu einer Beschädigung oder sogar zu einer Zerstörung des Erzeugnisses führen können.

Soweit das Erzeugnis durch einen erfindungsgemäßen Versatz hergestellt wird, kann die Regellosigkeit der zweiten Bereiche im Erzeugnis insbesondere dadurch verbessert werden, dass die Komponenten des Versatzes bei der Herstellung des Erzeugnisses miteinander vermischt werden, insbesondere innig miteinander vermischt werden.

Gegenstand der Erfindung ist ferner die Verwendung eines wie vorstehend beschriebenen synthetischen Rohstoffs aus Körpern in einem Versatz zur Herstellung eines feuerfesten Erzeugnisses zur Verringerung des Elastizitätsmoduls eines aus dem Versatz herstellbaren feuerfesten Erzeugnisses.

Die Verwendung kann dabei insbesondere mit den Maßgaben gemäß dem erfindungsgemäßen Verfahren erfolgen.

Weitere Merkmale der Erfindung ergeben sich aus den Ansprüchen sowie dem nachfolgend beschriebenen Ausführungsbeispiel der Erfindung.

Alle der hierin offenbarten Merkmale der Erfindung sind, einzeln oder in Kombination, beliebig miteinander kombinierbar.

### Ausführungsbeispiel

Es wurden vier erfindungsgemäße Versätze hergestellt, welche jeweils eine Grundkomponente aus einem feuerfesten keramischen Rohstoff in Form von Sintermagnesia sowie einen synthetischen Rohstoff aufwiesen.

Die Sintermagnesia der Grundkomponente lag in der folgenden Korngrößenverteilung vor, bezogen auf die Sintermagnesia:

| | |
|---|---|
| 1 bis 5 mm: | 50 Massen-% |
| 0,1 bis <1mm: | 20 Masse-% |
| < 0,1 mm: | 30 Masse-% |

Ferner wies die Sintermagnesia die folgende chemische Zusammensetzung auf, bezogen auf die Sintermagnesia:

| | |
|---|---|
| MgO: | 96,4 Masse-% |
| CaO: | 2,0 Masse-% |
| SiO₂: | 0,7 Masse-% |
| Fe₂O₃: | 0,1 Masse-% |
| Rest: | 0,8 Masse-% |

Der synthetische Rohstoff bestand entweder aus plättchenförmigen Körpern oder aus stiftförmigen Körpern, die jeweils aus miteinander versinterten Körnern aus Sinterkorund gebildet waren. Der Anteil der mineralischen Phase Korund (Al₂O₃) in den plättchenförmigen Körpern und stiftförmigen Körpern betrug jeweils > 99,8 Masse-%. Die plättchenförmigen Körper wiesen eine Länge und Breite jeweils im Bereich von etwa 3 bis 10 mm und eine Dicke von etwa 1 mm auf. Die stiftförmigen Körper wiesen eine Dicke und Breite von jeweils etwa 1 mm und eine Länge von etwa 8 mm auf.

Aus diesen Komponenten wurden die vier, in der nachfolgenden Tabelle 1 mit V1 bis V4 bezeichneten Versätze hergestellt, deren jeweilige Zusammensetzung in Tabelle 1 angegeben ist.

Zu Vergleichszwecken wurden zwei weitere, nicht erfindungsgemäße Versätze hergestellt. Diese Versätze wiesen zum einen ebenfalls die Sintermagnesia auf, die auch die erfindungsgemäßen Versätze der Ausführungsbeispiele aufwiesen. Allerdings wiesen die nicht erfindungsgemäßen Versätze nicht einen der synthetischen Rohstoffe der erfindungsgemäßen Versätze auf, sondern einen weiteren Rohstoff in Form von Edelkorund mit einer Korngröße im Bereich von 0,5 bis 1 mm und einem Anteil an Al₂O₃ von 99,8 Masse-%, bezogen auf den Edelkorund. Die Zusammensetzung dieser nicht erfindungsgemäßen Versätze, die in Tabelle 1 mit V5 und V6 bezeichnet sind, ist ebenfalls in Tabelle 1 angegeben.

**Tabelle 1**

| **Komponente** | **V1** | **V2** | **V3** | **V4** | **V5** | **V6** |
|---|---|---|---|---|---|---|
| Sintermagnesia | 96 | 96 | 98 | 98 | 96 | 99 |
| Edelkorund | | | | | 4 | 1 |
| Plättchenförmige Körper | 4 | | 2 | | | |
| Stiftförmige Körper | | 4 | | 2 | | |

Die Angaben zu den Versatzbeispielen V1 bis V6 in Tabelle 1 sind jeweils Angaben in Volumen-%, bezogen auf das Gesamtvolumen des jeweiligen Versatzes.

Die Versätze V1 bis V6 wurden gemäß dem erfindungsgemäßen Verfahren behandelt. Hierzu wurden die Versätze V1 bis V6 zunächst in einem Mischer gemischt. Während des Mischens wurden die Versätze V1 bis V6 jeweils mit einem Grünbinder in Form von Ligninsulfonat vermischt. Dabei wurde der Binder den Versätzen V1 bis V6 jeweils in einem Massenanteil von 3,9 % zugegeben, bezogen auf die Gesamtmasse des Versatzes ohne den Binder.

Anschließend wurden die Versätze V1 bis V6 in einer Presse bei einem Pressdruck von 130 MPa zu Grünkörpern geformt und daraufhin bei einer Temperatur von 120°C für 24 Stunden in einem Trockner getrocknet.

Die getrockneten Grünkörper wurden schließlich zu feuerfesten keramischen Erzeugnissen gebrannt. Der Brand wurde in einem Ofen bei einer Temperatur von 1.600°C für eine Dauer von 6 Stunden durchgeführt. Dabei versinterten die Komponenten der Versätze V1 bis V6 jeweils zu einem feuerfesten keramischen Erzeugnis.

Die durch den Brand der Versätze V1 bis V4 erhaltenen gesinterten, feuerfesten keramischen Erzeugnisse wiesen jeweils einen ersten Bereich aus den miteinander versinterten Körnern der Sintermagnesia der Grundkomponente auf. Ferner wiesen die aus den Versätzen V1 und V3 hergestellten Erzeugnisse jeweils zweite Bereiche auf, die aus den plättchenförmigen Körpern des jeweiligen Versatzes V1 und V3 gebildet waren. Entsprechend wiesen die aus den Versätzen V2 und V4 hergestellten Erzeugnisse jeweils zweite Bereiche auf, die aus den stiftförmigen Körpern des jeweiligen Versatzes V2 und V4 gebildet waren. Dabei bildete der erste Bereich aus der versinterten Sintermagnesia jeweils eine Matrix des Erzeugnisses aus, in die die zweiten Bereiche jeweils inselartig eingebettet waren. Das Gefüge der zweiten Bereiche war gebildet au einem jeweils inneren Bereich aus miteinander versinterten Körnern aus Schmelzkorund und einem Randbereich aus Magnesiaspinell, der den inneren Bereich der Körner aus Schmelzkorund umgab. Dieser Randbereich aus Magnesiaspinell der zweiten Bereiche hatte sich während des Brandes aus dem Schmelzkorund der plättchenförmigen und stiftförmigen Körper einerseits und der Sintermagnesia der Grundkomponente andererseits gebildet. Die Geometrie der zweiten Bereiche in den Erzeugnissen aus den Versätzen V1 und V3 entsprach der Geometrie der plättchenförmigen Körper und die Geometrie der zweiten Bereiche in den Erzeugnissen aus den Versätzen V2 und V4 entsprach der Geometrie der stiftförmigen Körper.

Auf Grund des Mischens der Versätze V1 bis V4 waren die plättchenförmigen und stiftförmigen Körper jeweils gleichmäßig und regellos über das Volumen der Versätze V1 bis V4 verteilt, womit die zweiten Bereiche jeweils gleichmäßig und ohne Ordnung in der aus dem ersten Bereich gebildeten Matrix im jeweiligen feuerfesten keramischen Erzeugnis angeordnet waren.

Der erste Bereich bildete in den Erzeugnissen jeweils ein Gefüge aus miteinander versinterten Körnern aus Sintermagnesia aus. Der erste Bereich bestand jeweils überwiegend aus der mineralischen Phase Periklas. Damit unterschieden sich das Gefüge des ersten Bereiches und das Gefüge der zweiten Bereiche jeweils deutlich voneinander, und zwar insbesondere hinsichtlich der jeweiligen mineralischen Phase Periklas beziehungsweise Korund/Magnesiaspinell.

Auf Grund ihrer speziellen Geometrie sowie ihres sich vom ersten Bereich unterscheidenden Gefüges wirkten die zweiten Bereiche in den Erzeugnissen jeweils als Elastifizierer. Diese elastifizierende Wirkung konnte an Hand eines signifikant reduzierten Elastizitätsmoduls der feuerfesten keramischen Erzeugnisse nachgewiesen werden.

Die durch den Brand der Versätze V5 und V6 erhaltenen gesinterten, feuerfesten keramischen Erzeugnisse wiesen jeweils einen ersten Bereich aus den miteinander versinterten Körnern der Sintermagnesia auf, in die Bereiche aus Magnesiaspinell eingelagert waren. Dieser Magnesiaspinell hatte sich während des keramischen Brandes aus der Sintermagnesia und dem Edelkorund gebildet. Dieser Magnesiaspinell wirkte in den Erzeugnissen wie ein aus dem Stand der Technik bekannter Elastifizierer.

Um die Sprödigkeit der aus den Versätzen V1 bis V6 hergestellten feuerfesten keramischen Erzeugnisse bestimmen zu können, wurde der Elastizitätsmodul (E-Modul) der aus den Versätzen V1 bis V6 hergestellten, feuerfesten keramischen Erzeugnisse bestimmt. Der E-Modul wurde dabei bestimmt aus der Schalllaufzeit gemäß ASTM C 1419-99a (reapproved 2009).

In der nachfolgenden Tabelle 2 sind die danach erhaltenen Ergebnisse dieser Messungen angegeben, wobei die aus den erfindungsgemäßen Versätzen V1 bis V4 hergestellten feuerfesten keramischen Erzeugnisse mit V1 bis V4 und die aus den Versätzen V5 und V6 gemäß dem Stand der Technik hergestellten feuerfesten keramischen Erzeugnisse mit V5 und V6 bezeichnet sind.

**Tabelle 2**

| Erzeugnis | E-Modul [kN/mm²] |
|---|---|
| V1 | 17 |
| V2 | 26 |
| V3 | 33 |
| V4 | 35 |
| V5 | 52 |
| V6 | 65 |

Wie sich aus den in Tabelle 2 angegebenen Werten ergibt, konnte durch die erfindungsgemäße Verwendung des synthetischen Rohstoffs aus Körpern aus versinterten Körnern aus Korund in den Versätzen V1 bis V4 in den daraus hergestellten feuerfesten keramischen Erzeugnissen der E-Modul signifikant gegenüber dem E-Modul in solchen Erzeugnissen verringert werden, die aus Versätzen hergestellt waren, die sich nur dadurch von den Versätzen V1 bis V4 unterschieden, als diese statt der Körper Edelkorund aufwiesen.

## Patentansprüche

1. Versatz zur Herstellung eines feuerfesten Erzeugnisses, umfassend die folgenden Komponenten:
1.1 Eine Grundkomponente aus wenigstens einem feuerfesten keramischen Rohstoff, die zu wenigstens 50 Masse-% aus MgO besteht; sowie
1.2 wenigstens einen synthetischen Rohstoff mit folgenden Merkmalen:
1.2.1 Der synthetische Rohstoff besteht aus Körpern, wobei die Körper die folgenden Merkmale aufweisen:
1.2.1.1 Die Körper bestehen aus miteinander versinterten Körnern aus wenigstens einem feuerfesten keramischen Rohstoff, wobei
1.2.1.2 die Körper einen Anteil an Tonmineralen unter 10 Masse-%, bezogen auf die Gesamtmasse der Körper, aufweisen;
1.2.2 die Körper weisen ein Verhältnis von (Dicke):(Breite):(Länge) von (1):(≥ 1 und ≤ Länge):(≥ 3) auf.

2. Versatz nach Anspruch 1, wobei die Körper miteinander versinterte Körner aus wenigstens einem der folgenden feuerfesten keramischen Rohstoffe umfassen: Magnesia, Spinell, Korund, Zirkonia, Forsterit, Chromerz, Zirkonkorund, Zirkonmullit, Aluminiumtitanat, Magnesiumtitanat oder Calciumtitanat.

3. Versatz nach wenigstens einem der vorhergehenden Ansprüche, wobei die Körper eine Länge im Bereich von 1 bis 30 mm aufweisen.

4. Versatz nach wenigstens einem der vorhergehenden Ansprüche, wobei der wenigstens eine feuerfeste keramische Rohstoff der Grundkomponente in Form von Körnern vorliegt und wobei die Körper eine Länge aufweisen, die wenigstens der Länge des mittleren Korndurchmessers der größten Körner der Grundkomponente entspricht.

5. Versatz nach wenigstens einem der vorhergehenden Ansprüche, wobei die Körper in einem Volumen im Bereich von 0,5 bis 30 Volumen-%, bezogen auf das Gesamtvolumen des Versatzes, im Versatz vorliegen.

6. Versatz nach wenigstens einem der vorhergehenden Ansprüche, wobei die Grundkomponente in einem Volumenanteil im Bereich von 70 bis 99,5 Volumen-%, bezogen auf das Gesamtvolumen des Versatzes, im Versatz vorliegt.

7. Versatz nach wenigstens einem der vorhergehenden Ansprüche, wobei die Grundkomponente wenigstens einen der folgenden feuerfesten keramischen Rohstoffe umfasst: Magnesia, Doloma, Spinell, Korund, Forsterit, Chromit oder Mullit.

8. Versatz nach wenigstens einem der vorhergehenden Ansprüche, wobei die Grundkomponente sowie die Körper derart im Versatz vorliegen, dass in einem aus dem Versatz durch einen keramischen Brand hergestellten feuerfesten Erzeugnis der aus der Grundkomponente gebildete Bereich des Erzeugnisses einerseits und die aus den Körpern gebildeten Bereiche des Erzeugnisses andererseits sich hinsichtlich ihres jeweiligen Gefüges unterscheiden.

9. Verfahren zur Herstellung eines feuerfesten Erzeugnisses, umfassend die folgenden Merkmale:
9.1 Zur Verfügungstellung eines Versatzes nach wenigstens einem der vorhergehenden Ansprüche;
9.2 Brennen des Versatzes zu einem feuerfesten Erzeugnis.

10. Feuerfestes Erzeugnis, umfassend die folgenden Merkmale:
10.1 Einen ersten Bereich aus miteinander verbundenen Körnern aus wenigstens einem feuerfesten keramischen Rohstoff, wobei der erste Bereich Periklas umfasst; sowie
10.2 zweite Bereiche, wobei die zweiten Bereiche die folgenden Merkmale aufweisen:
10.2.1 die zweiten Bereiche bestehen aus miteinander versinterten Körnern aus wenigstens einem feuerfesten keramischen Rohstoff, wobei
10.2.2 die zweiten Bereiche einen Anteil an Tonmineralen unter 10 Masse-%, bezogen auf die Gesamtmasse der zweiten Bereiche, aufweisen;
10.2.3 die zweiten Bereiche weisen ein Verhältnis von (Dicke):(Breite):(Länge) von (1):(≥ 1 und ≤ Länge):(≥ 3) auf;
10.3 die zweiten Bereiche sind ohne Ordnung im ersten Bereich angeordnet;
10.4 der erste Bereich einerseits und die zweiten Bereiche andererseits unterscheiden sich hinsichtlich ihres jeweiligen Gefüges.

11. Erzeugnis nach Anspruch 10, wobei die zweiten Bereiche miteinander versinterte Körnern aus wenigstens einem der folgenden feuerfesten keramischen Rohstoffe umfassen: Magnesia, Spinell, Korund, Zirkonia, Forsterit, Chromerz, Zirkonkorund, Zirkonmullit, Aluminiumtitanat, Magnesiumtitanat oder Calciumtitanat.

12. Erzeugnis nach wenigstens einem der Ansprüche 10 bis 11, wobei die zweiten Bereiche eine Länge im Bereich von 1 bis 30 mm aufweisen.

13. Erzeugnis nach wenigstens einem der Ansprüche 10 bis 12, wobei die zweiten Bereiche eine Länge aufweisen, die wenigstens der Länge des mittleren Korndurchmessers der größten Körner des ersten Bereichs entspricht.

14. Erzeugnis nach wenigstens einem der Ansprüche 10 bis 13, wobei die zweiten Bereiche in einem Volumenanteil im Bereich von 0,5 bis 30 Volumen-%, bezogen auf das Gesamtvolumen des Erzeugnisses, im Erzeugnis vorliegen.

15. Erzeugnis nach wenigstens einem der Ansprüche 10 bis 14, wobei der erste Bereiche in einem Volumenanteil im Bereich von 70 bis 99,5 Volumen-%, bezogen auf das Gesamtvolumen des Erzeugnisses, im Erzeugnis vorliegt.

16. Erzeugnis nach wenigstens einem der Ansprüche 10 bis 15, wobei der erste Bereich miteinander versinterten Körnern aus wenigstens einem der folgenden feuerfesten keramischen Rohstoffe umfasst: Magnesia, Doloma, Spinell, Korund, Forsterit, Chromit oder Mullit.

17. Verwendung eines synthetischen Rohstoffs mit folgenden Merkmalen:
17.1 Der synthetische Rohstoff besteht aus Körpern, wobei die Körper die folgenden Merkmale aufweisen:
17.1.1 die Körper bestehen aus miteinander versinterten Körnern aus wenigstens einem feuerfesten keramischen Rohstoff, wobei
17.1.2 die Körper einen Anteil an Tonmineralen unter 10 Masse-%, bezogen auf die Gesamtmasse der Körper, aufweisen;
17.1.3 die Körper weisen ein Verhältnis von (Dicke):(Breite):(Länge) von (1):(≥ 1 und ≤ Länge):(≥ 3) auf;
17.2 der synthetische Rohstoff wird in einem Versatz zur Herstellung eines feuerfesten Erzeugnisses zur Verringerung des Elastizitätsmoduls eines aus dem Versatz herstellbaren feuerfesten keramischen Erzeugnisses verwendet.

## Claims

1. A batch for producing a refractory product comprising the following components:
1.1 A base component of at least one refractory ceramic raw material; and
1.2 at least one synthetic raw material with the following features:
1.2.1 The synthetic raw material consists of bodies, the bodies having the following features:
1.2.1.1 The bodies consist of grains of at least one refractory ceramic raw material sintered together,
1.2.1.2. the bodies having a proportion of clay minerals of less than 10 % by mass relative to the total mass of the bodies;
1.2.2. the bodies have a ratio of (thickness):(width):(length) of (1):(≥ 1 and ≤ length):(≥ 3)

2. Batch according to claim 1, wherein the bodies comprise grains of at least one of the following refractory ceramic raw materials sintered together: magnesia, spinel, corundum, zirconia, forsterite, chromium ore, zirconia corundum, zirconmullite, aluminum titanate, magnesium titanate or calcium titanate.

3. Batch according to at least one of the preceding claims, wherein the bodies have a length in the range of 1 to 30 mm.

4. Batch according to at least one of the preceding claims, wherein the at least one refractory ceramic raw material of the base component is present in the form of grains and wherein the bodies have a length which corresponds at least to the length of the average grain diameter of the largest grains of the base component.

5. Batch according to at least one of the preceding claims, wherein the bodies are present in a volume in the range of 0.5 to 30% by volume in the batch, relative to the total volume of the batch.

6. Batch according to at least one of the preceding claims, wherein the base component is present in a volume in the range of 70 to 99.5% by volume in the batch, relative to the total volume of the batch.

7. Batch according to at least one of the preceding claims, wherein the base component comprises at least one of the following refractory ceramic raw materials: magnesia, doloma, spinel, corundum, forsterite, chromite or mullite.

8. Batch according to at least one of the preceding claims, wherein the base component as well as the bodies are present in the batch in such a way that in a refractory product produced from the batch by a ceramic firing, the area of the product formed from the base component on the one hand and the areas of the product formed from the bodies on the other hand differ in their respective microstructure.

9. A method of producing a refractory product comprising the following features:
9.1 Provision of a batch according to at least one of the preceding claims;
9.2 Firing the batch to a refractory product.

10. A refractory product comprising the following features:
10.1 A first area of interconnected grains of at least one refractory ceramic raw material; and
10.2 second areas, the second areas having the following features:
10.2.1 The second areas consist of grains of at least one refractory ceramic raw material sintered together, wherein
10.2.2. the second areas have proportion of clay minerals of less than 10% by mass relative to the total mass of the second areas;
10.2.3 the second areas have a ratio of (thickness):(width):(length) of (1):(≥ 1 and ≤ length):(≥ 3);
10.3 the second regions are arranged without order in the first area;
10.4 the first area on the one hand and the second areas on the other hand differ in their respective micostructure.

11. Product according to claim 10, wherein the second areas comprise grains of at least one of the following refractory ceramic raw materials sintered together: magnesia, spinel, corundum, zirconia, forsterite, chromium ore, zirconia corundum, zirconmullite, aluminum titanate, magnesium titanate or calcium titanate.

12. Product according to at least one of claims 10 to 11, wherein the second areas have a length in the range of 1 to 30 mm.

13. Product according to at least one of claims 10 to 12, wherein the second areas have a length at least equal to the length of the average grain diameter of the largest grains of the first area.

14. Product according to at least one of claims 10 to 13, wherein the second areas are present in a proportion by volume in the range of 0.5 to 30% by volume, relative to the total volume of the product.

15. Product according to at least one of claims 10 to 14, wherein the first area is present in the product in a proportion by volume in the range of 70 to 99.5% by volume, relative to the total volume of the product.

16. Product according to at least one of claims 10 to 15, wherein the first area comprises grains of at least one of the following refractory ceramic raw materials sintered together: magnesia, doloma, spinel, corundum, forsterite, chromite or mullite.

17. Use of a synthetic raw material having the following features:
17.1 The synthetic raw material consists of bodies, the bodies having the following features:
17.1.1 The bodies consist of grains of at least one refractory ceramic raw material sintered together, wherein
17.1.2 the bodies have a proportion of clay minerals of less than 10 % by mass, relative to the total mass of the bodies;
17.1.3 the bodies have a ratio of (thickness):(width):(length) of (1):(≥ 1 and ≤ length):(≥ 3);
17.2 the synthetic raw material is used in a batch to produce a refractory product to reduce the modulus of elasticity of a refractory ceramic product which can be produced from the batch.

## Revendications

1. Mélange, destiné à la fabrication d'un produit réfractaire, comprenant les composants suivants :
1.1 un composant de base, en au moins une matière première céramique réfractaire, qui est constituée d'au moins 50 % en masse de MgO ; ainsi
1.2 qu'au moins une matière première synthétique, présentant les caractéristiques suivantes :
1.2.1 la matière première synthétique est constituée de corps, les corps présentant les caractéristiques suivantes :
1.2.1.1 les corps sont constitués de granules frittées entre elles, en au moins une matière céramique réfractaire,
1.2.1.2 les corps comportent une part de minéraux argileux qui est inférieure à 10 % en masse, rapportés à la masse totale des corps ;
1.2.2 les corps présentent un rapport de (épaisseur) : (largeur) : longueur) de (1) : (≥ 1 et ≤ longueur) : (≥ 3).

2. Mélange selon la revendication 1, les corps comprenant des granules frittées entre elles en au moins l'une des matières premières céramiques réfractaires suivantes la magnésie, le spinelle, le corindon, la zircone, la forstérite, le minerai de chrome, le corindon zirconien, la mullite de zirconium, le titanate d'aluminium, le titanate de magnésium ou le titanate de calcium.

3. Mélange selon au moins l'une quelconque des revendications précédentes, les corps présentant une longueur de l'ordre de 1 à 30 mm.

4. Mélange selon au moins l'une quelconque des revendications précédentes, l'au moins une matière première céramique réfractaire dans le composant de base se présentant sous la forme de granules et les corps présentant une longueur qui correspond au moins à la longueur du diamètre moyen des granules les plus grandes du composant de base.

5. Mélange selon au moins l'une quelconque des revendications précédentes, les corps étant présents dans le mélange dans un volume de l'ordre de 0,5 à 30 % en volume, rapportés au volume total du mélange.

6. Mélange selon au moins l'une quelconque des revendications précédentes, le composant de base étant présent dans le mélange dans une proportion volumique de l'ordre de 70 à 99,5 % en volume, rapportés au volume total du mélange.

7. Mélange selon au moins l'une quelconque des revendications précédentes, le composant de base comprenant au moins l'une des matières premières céramiques réfractaires suivantes : la magnésie, la dolomie, le spinelle, le corindon, la forstérite, la chromite ou la mullite.

8. Mélange selon au moins l'une quelconque des revendications précédentes, le composant de base ainsi quel le corps étant présents dans le mélange de telle sorte que dans un produit réfractaire fabriqué par une cuisson céramique du mélange, les zones du produit formées du composant de base d'une part et les zones du produit formées des corps d'autre part se différencient au niveau de leur texture respective.

9. Procédé, destiné à la fabrication d'un produit réfractaire, comprenant les caractéristiques suivantes :
9.1 la mise à disposition d'un mélange selon au moins l'une quelconque des revendications précédentes ;
9.2 la cuisson du mélange en un produit réfractaire.

10. Produit réfractaire, présentant les caractéristiques suivantes :
10.1 une première zone, composée de granules reliées entre elles en au moins une matière première céramique réfractaire, la première zone comprenant de la périclase ; ainsi que
10.2 des deuxièmes zones, les deuxièmes zones présentant les caractéristiques suivantes :
10.2.1 les deuxièmes zones sont constituées de granules frittées entre elles, constituées d'au moins une matière première céramique réfractaire,
10.2.2 les deuxièmes zones présentent une part de minéraux argileux qui est inférieure à 10 % en masse, rapportés à la masse totale des deuxièmes zones ;
10.2.3 les deuxièmes zones présentent un rapport de (épaisseur) : (largeur) : longueur) de (1) : (≥ 1 et ≤ longueur) : (≥ 3)
10.3 les deuxièmes zones sont placées sans un ordre quelconque dans la première zone ;
10.4 la première zone d'une part et les deuxièmes zones d'autre part se différencient au niveau de leur texture respective.

11. Produit selon la revendication 10, les deuxièmes zones comprenant des granules frittées entre elles, constituées d'au moins l'une des matières premières céramiques réfractaires suivantes: la magnésie, le spinelle, le corindon, la zircone, la forstérite, le minerai de chrome, le corindon zirconien, la mullite de zirconium, le titanate d'aluminium, le titanate de magnésium ou le titanate de calcium.

12. Produit selon au moins l'une quelconque des revendications 10 à 11, les deuxièmes zones présentant une longueur de l'ordre de 1 à 30 mm.

13. Produit selon au moins l'une quelconque des revendications 10 à 12, les deuxièmes zones présentant une longueur qui correspond au moins à la longueur du diamètre moyen des granules les plus grandes de la première zone.

14. Produit selon au moins l'une quelconque des revendications 10 à 13, les deuxièmes zones étant présentes dans le produit dans une proportion volumique de l'ordre de 0,5 à 30 % en volume, rapportés au volume total du produit.

15. Produit selon au moins l'une quelconque des revendications 10 à 14, la première zone étant présente dans une proportion volumique de l'ordre de 70 à 99,5 % en volume, rapportés au volume total du produit.

16. Produit selon au moins l'une quelconque des revendications 10 à 15, la première zone comprenant des granules frittées entre elles, constituées d'au moins l'une des matières premières céramiques réfractaires suivantes la magnésie, la dolomie, le spinelle, le corindon, la forstérite, la chromite ou la mullite.

17. Utilisation d'une matière première synthétique, présentant les caractéristiques suivantes :
17.1 la matière première synthétique est constituée de corps, les corps présentant les caractéristiques suivantes :
17.1.1 les corps sont constitués de granules frittées entre elles, en au moins une matière céramique réfractaire,
17.1.2 les corps comportent une part de minéraux argileux qui est inférieure à 10 % en masse, rapportés à la masse totale des corps ;
17.1.3 les corps présentent un rapport de (épaisseur) : (largeur) : longueur) de (1) : (≥ 1 et ≤ longueur) : (≥ 3) ;
17.2 on utilise la matière première synthétique dans un mélange destiné à la fabrication d'un produit réfractaire, pour réduire le module d'élasticité d'un produit céramique réfractaire fabriqué à partir du mélange.
